# EUROPEAN PATENT APPLICATION

(11) **EP 4 830 530 A1**
(43) Date of publication of application: **28.10.2026**
(21) Application number: 24907481.6
(22) Date of filing: 19.12.2024
(51) Int. Cl.: A23L 2/00, A23L 2/52, A23L 5/20

(54) **BEVERAGE WITH SUPPRESSED CULTURE MEDIUM ODOR OF LACTIC ACID BACTERIA**

(30) Priority: 20.12.2023 JP 2023214904
(71) Applicant: KIRIN HOLDINGS KABUSHIKI KAISHA, Nakano-ku, Tokyo 164-0001 (JP)
(72) Inventor: YOKOYAMA, Kiichi, Tokyo 164-0001 (JP); YOTSUMOTO, Yuuko, Tokyo 164-0001 (JP); SUZUKI, Mihoko, Tokyo 164-0001 (JP); KUMATA, Noriko, Tokyo 164-0001 (JP)
(74) Representative: Hoffmann Eitle
(86) International application number: PCT/JP2024/044901
(87) International publication number: WO 2025/135097

(57) **Abstract**

It is an object of the present invention to provide a beverage containing dead cells of lactic acid bacteria in which a culture medium odor of the lactic acid bacteria is suppressed, a method for producing the same, and the like. In the beverage, when a content concentration of the dead cells of one or more kinds of lactic acid bacteria is 1.3 billion cells/L or more, and a content concentration of hesperidin is from 10 to 1,000 mg/L, the object of the present invention can be solved.

## Description

### Technical Field

The present invention relates to a beverage and a method for producing the same. More specifically, the present invention relates to a beverage containing dead cells of lactic acid bacteria and hesperidin at a predetermined concentration, in which the culture medium odor of the lactic acid bacteria is suppressed, a method for producing the same, and the like.

### Background Art

In order to respond to the increasing health consciousness of consumers, a wide variety of beverages containing dead cells of lactic acid bacteria have been commercialized. However, in a beverage containing dead cells of lactic acid bacteria, the flavor of the beverage may be impaired due to the culture medium odor of the lactic acid bacteria.

As a technique related to suppression of the culture medium odor of the lactic acid bacteria in beverages, for example, Patent Document 1 discloses a beverage having a pH value of more than 4.6 and containing lactic acid bacteria powder, in which at least one selected from the group consisting of less than 20,000 ppb of nootkatone, less than 50,000 ppb of linalool, and less than 50,000 ppb of valencene is blended. However, it has not been known that the culture medium odor of lactic acid bacteria in a beverage can be suppressed by incorporating hesperidin at a predetermined concentration into the beverage.

### Prior Art Document

### Patent Document

Patent Document 1: Japanese unexamined Patent Application Publication No. 2019-103408

### Summary of the Invention

### Object to be Solved by the Invention

In a beverage containing dead cells of lactic acid bacteria, there is a problem that the flavor of the beverage may be impaired due to the culture medium odor of the lactic acid bacteria.

It is an object of the present invention to provide a beverage containing dead cells of lactic acid bacteria in which the culture medium odor of the lactic acid bacteria is suppressed, a method for producing the same, and the like.

### Means to Solve the Object

In order to solve the above object, the present inventors have conducted extensive studies on various methods, and have found that, in a beverage which contains dead cells of one or more kinds of lactic acid bacteria at a concentration of 1.3 billion cells/L or more, when a content concentration of hesperidin is set to from 10 to 1,000 mg/L, the culture medium odor of the lactic acid bacteria can be suppressed, thereby completing the present invention.

In other words, according to the present invention, the following inventions and the like are provided.
(1) A beverage comprising dead cells of one or more kinds of lactic acid bacteria at a concentration of 1.3 billion cells/L or more, and hesperidin at a concentration of from 10 to 1,000 mg/L.
(2) The beverage according to (1), wherein a pH value of the beverage is 2.5 or more and 8.0 or less.
(3) The beverage according to (1) or (2), wherein the lactic acid bacteria are one or more kinds of bacteria selected from the group consisting of bacteria belonging to the genus *Lactococcus.*
(4) A method for producing a beverage, comprising incorporating dead cells of one or more kinds of lactic acid bacteria into the beverage at a concentration of 1.3 billion cells/L or more, and incorporating hesperidin into the beverage at a concentration of from 10 to 1,000 mg/L during the production of the beverage.
(5) A method for suppressing a culture medium odor of lactic acid bacteria in a beverage, comprising incorporating dead cells of one or more kinds of lactic acid bacteria into the beverage at a concentration of 1.3 billion cells/L or more, and incorporating hesperidin into the beverage at a concentration of from 10 to 1,000 mg/L during the production of the beverage.

### Effect of the Invention

According to the present invention, it is possible to provide a beverage containing dead cells of lactic acid bacteria in which a culture medium odor of the lactic acid bacteria is suppressed, a method for producing the same, and the like.

### Brief Description of Drawings

### [Figure 1]

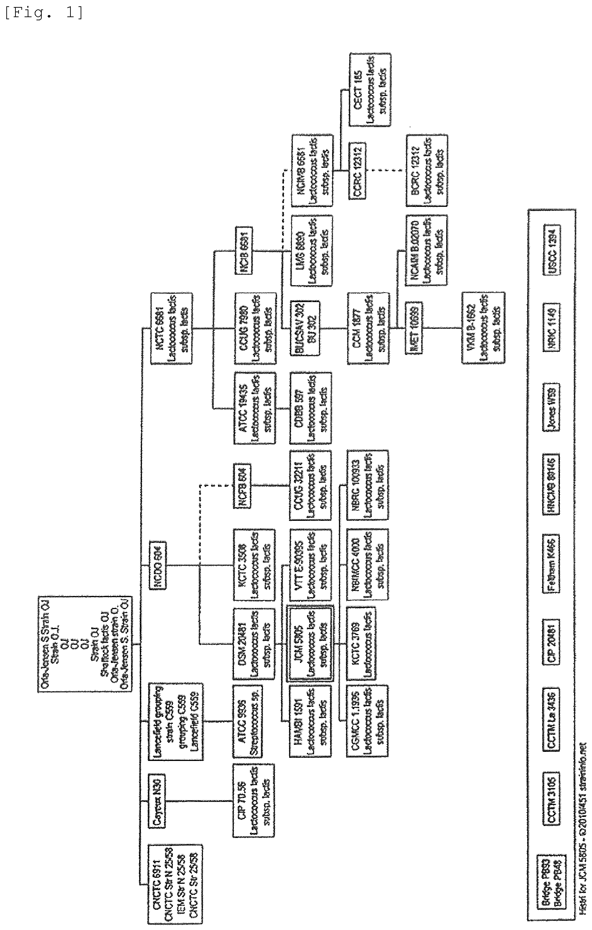

Figure 1 is a diagram illustrating a relationship between *Lactococcus lactis* subsp. *lactis* JCM5805 strain and each of strains equivalent thereto (strains derived from the JCM5805 strain and strains from which the JCM5805 strain is derived).

### Mode of Carrying Out the Invention

The present invention includes the following:
[1] A beverage comprising dead cells of one or more kinds of lactic acid bacteria at a concentration of 1.3 billion cells/L or more, and hesperidin at a concentration of from 10 to 1,000 mg/L (hereinafter, also referred to as a "beverage of the present invention").
[2] A method for producing a beverage, comprising incorporating dead cells of one or more kinds of lactic acid bacteria into the beverage at a concentration of 1.3 billion cells/L or more, and incorporating hesperidin into the beverage at a concentration of from 10 to 1,000 mg/L during the production of the beverage (hereinafter, also referred to as a "method for production according to the present invention").
[3] A method for suppressing a culture medium odor of lactic acid bacteria in a beverage, comprising incorporating dead cells of one or more kinds of lactic acid bacteria into the beverage at a concentration of 1.3 billion cells/L or more, and incorporating hesperidin into the beverage at a concentration of from 10 to 1,000 mg/L during the production of the beverage (hereinafter, also referred to as a " method for suppression according to the present invention ").

It should be noted that, in the present specification, a numerical range expressed by "from...to" naturally includes, unless otherwise specified, both endpoints of the numerical range of "from...to". Further, although "contain" and "add" are not synonymous, in the present specification, all descriptions explaining the present invention are to be understood as also describing inventions in which "contain" is replaced with phrase "added"; for example, an invention in which "contain" is replaced with "is added", and an invention in which "contain" is replaced with "add" are also described.

### (Dead Cells of Lactic Acid Bacteria)

In the present invention, dead cells of one or more kinds of lactic acid bacteria are used.

"Lactic acid bacteria" is a generic term for all bacteria taxonomically classified as lactic acid bacteria, and is not limited by a genus, a species, a strain, or the like. Examples of such "lactic acid bacteria" include bacteria that produce a large amount of lactic acid (preferably lactic acid in an amount of 50% or more of the consumed sugar) from sugars by lactic fermentation, such as bacteria belonging to the genus *Lactococcus,* bacteria belonging to the genus *Lactobacillus,* bacteria belonging to the genus *Streptococcus,* bacteria belonging to the genus *Leuconostoc,* bacteria belonging to the genus *Pediococcus,* bacteria belonging to the genus *Enterococcus,* bacteria belonging to the genus *Oenococcus,* bacteria belonging to the genus *Bifidobacterium,* bacteria belonging to the genus *Weissella,* and bacteria belonging to the genus *Tetragenococcus.*

It should be noted that the bacteria belonging to the genus *Lactobacillus* include bacteria that were classified under the genus *Lactobacillus* prior to the reclassification of the genus. For example, such bacteria include those reclassified into new genera such as *Acetilactobacillus, Agrilactobacillus, Amylolactobacillus, Apilactobacillus, Bombilactobacillus, Companilactobacillus, Dellaglioa, Fructilactobacillus, Furfurilactobacillus, Holzapfelia, Lacticaseibacillus, Lactiplantibacillus, Lapidilactobacillus, Latilactobacillus, Lentilactobacillus, Levilactobacillus, Ligilactobacillus, Limosilactobacillus, Liquorilactobacillus, Loigolactobacillus, Paralactobacillus, Paucilactobacillus,* and *Schleiferilactobacillus, Secundilactobacillus.*

The genus and the species of the lactic acid bacteria used in the present invention are not particularly limited, and examples thereof include one or more kinds of lactic acid bacteria selected from the group consisting of bacteria belonging to the genus *Lactococcus,* bacteria belonging to the genus *Lactobacillus,* bacteria belonging to the genus *Streptococcus,* bacteria belonging to the genus *Leuconostoc,* bacteria belonging to the genus *Pediococcus,* bacteria belonging to the genus *Enterococcus,* bacteria belonging to the genus *Oenococcus,* bacteria belonging to the genus *Bifidobacterium,* bacteria belonging to the genus *Weissella,* and bacteria belonging to the genus *Tetragenococcus;* preferably, one or more kinds of bacteria selected from the group consisting of the bacteria belonging to the genus *Lactococcus,* the bacteria belonging to the genus *Lactobacillus,* and the bacteria belonging to the genus *Pediococcus;* more preferably, one or more kinds of bacteria selected from the group consisting of the bacteria belonging to the genus *Lactococcus* and the bacteria belonging to the genus *Lactobacillus;* even more preferably, one or more kinds of bacteria selected from the group consisting of the bacteria belonging to the genus *Lactococcus;* still more preferably, one or more kinds of bacteria selected from the group consisting of bacteria of *Lactococcus lactis;* and yet more preferably, one or more kinds of bacteria selected from the group consisting of bacteria of *Lactococcus lactis* subsp. *lactis.*

More specific preferred embodiments of the lactic acid bacteria in the present invention include one or more kinds of bacteria selected from the group consisting of *Lactococcus lactis* subsp. *lactis* (such as *Lactococcus lactis* subsp. *lactis* JCM5805, *Lactococcus lactis* subsp. *lactis* NBRC12007, *Lactococcus lactis* subsp. *lactis* NRIC1150, *Lactococcus lactis* subsp. *lactis* JCM20101, *Lactococcus lactis* subsp. *lactis* JCM7638, and *Lactococcus lactis* subsp. *lactis* ATCC11454), *Lactococcus lactis* subsp. *lactis* biovar *diacetylactis, Lactococcus lactis* subsp. *cremoris* (such as *Lactococcus lactis* subsp. *cremoris* JCM16167 and *Lactococcus lactis* subsp. *cremoris* NBRC100676), *Lactococcus raffinolactis, Lactococcus piscium, Lactococcus plantarum* (such as *Lactococcus plantarum* JCM11056), *Lactococcus garvieae* (such as *Lactococcus garvieae* NBRC100934), *Lactococcus lactis* subsp. *hordniae* (such as *Lactococcus lactis* subsp. *hordniae* JCM1180 and *Lactococcus lactis* subsp. *hordniae* JCM11040), *Lactobacillus acidophilus* (such as *Lactobacillus acidophilus* L-92), *Lactobacillus delbrueckii* subsp. *bulgaricus* (such as *Lactobacillus bulgaricus* OLL1073R-1), *Lactobacillus delbrueckii* subsp. *delbrueckii, Lactobacillus delbrueckii* subsp. *lactis, Lactobacillus casei, Lactobacillus paracasei* (such as *Lactobacillus paracasei* KW3110 and *Lactobacillus paracasei* MCC1849), *Lactobacillus gasseri* (such as *Lactobacillus gasseri* SBT2055), *Lactobacillus helveticus, Lactobacillus johnsonii, Lactobacillus parakefiri* (such as *Lactobacillus parakefiri* JCM8573), *Lactobacillus plantarum* (such as *Lactobacillus plantarum* L-137), *Lactobacillus brevis, Lactobacillus rhamnosus* (such as *Lactobacillus rhamnosus* GG and *Lactobacillus rhamnosus* CRL1505), *Lactobacillus pentosus* (such as *Lactobacillus pentosus* ONRICb0240), *Lactobacillus fermentum, Lactobacillus fructi vorans, Lactobacillus hilgardii, Streptococcus salivarius* subsp. *thermophilus, Leuconostoc mesenteroides* subsp. *cremoris, Leuconostoc lactis* (such as *Leuconostoc lactis* NBRC12455), *Leuconostoc carnosum* (such as *Leuconostoc carnosum* JCM9695), *Pediococcus damnosus* (such as *Pediococcus damnosus* JCM5886), *Pediococcus pentosaceus, Pediococcus acidilactici* (such as *Pediococcus acidilactici* JCM8797 and *Pediococcus acidilactici* K15), *Pediococcus cellicola, Pediococcus claussenii, Pediococcus ethanolidurans, Pediococcus inopinatus, Pediococcus parvulus, Pediococcus stilesii, Enterococcus faecalis, Enterococcus faecium, Enterococcus alcedinis, Oenococcus oeni* (such as *Oenococcus oeni* JCM6125), *Bifidobacterium animalis* subsp. *lactis* (such as *Bifidobacterium animalis* subsp. *lactis* JCM10602), *Bifidobacterium longum* subsp. *infantis* (such as *Bifidobacterium longum* subsp. *infantis* JCM1222), *Weissella paramesenteroides* (such as *Weissella paramesenteroides* JCM9890) , *Weissella viridescens* (such as *Weissella viridescens* JCM1174), and *Tetragenococcus halophilus* (such as *Tetragenococcus halophilus* NRIC0098). Preferably, the lactic acid bacteria may be one or more kinds of bacteria selected from the group consisting of *Lactococcus lactis* subsp. *lactis, Lactococcus lactis* subsp. *lactis* biovar *diacetylactis, Lactococcus lactis* subsp. *cremoris, Lactococcus raffinolactis, Lactococcus piscium, Lactococcus plantarum, Lactococcus garvieae, Lactococcus lactis* subsp. *hordniae, Lactobacillus acidophilus, Lactobacillus delbrueckii* subsp. *bulgaricus, Lactobacillus delbrueckii* subsp. *delbrueckii, Lactobacillus delbrueckii* subsp. *lactis, Lactobacillus casei, Lactobacillus paracasei, Lactobacillus gasseri, Lactobacillus helveticus, Lactobacillus johnsonii, Lactobacillus parakefiri, Lactobacillus plantarum, Lactobacillus brevis, Lactobacillus rhamnosus, Lactobacillus pentosus, Lactobacillus fermentum, Lactobacillus fructivorans, Lactobacillus hilgardii, Pediococcus damnosus, Pediococcus pentosaceus, Pediococcus acidilactici, Pediococcus cellicola, Pediococcus claussenii, Pediococcus ethanolidurans, Pediococcus inopinatus, Pediococcus parvulus,* and *Pediococcus stilesii.* More preferably, the lactic acid bacteria may be one or more kinds of bacteria selected from the group consisting of *Lactococcus lactis* subsp. *lactis, Lactococcus lactis* subsp. *lactis* biovar *diacetylactis, Lactococcus lactis* subsp. *cremoris, Lactococcus raffinolactis, Lactococcus piscium, Lactococcus plantarum, Lactococcus garvieae, Lactococcus lactis* subsp. *hordniae, Lactobacillus acidophilus, Lactobacillus delbrueckii* subsp. *bulgaricus, Lactobacillus delbrueckii* subsp. *delbrueckii, Lactobacillus delbrueckii* subsp. *lactis, Lactobacillus casei, Lactobacillus paracasei, Lactobacillus gasseri, Lactobacillus helveticus, Lactobacillus johnsonii, Lactobacillus parakefiri, Lactobacillus plantarum, Lactobacillus brevis, Lactobacillus rhamnosus* (such as *Lactobacillus rhamnosus GG* and *Lactobacillus rhamnosus* CRL1505), *Lactobacillus pentosus, Lactobacillus fermentum, Lactobacillus fructivorans,* and *Lactobacillus hilgardii.* Even more preferably, the lactic acid bacteria may be one or more kinds of bacteria selected from the group consisting of *Lactococcus lactis* subsp. *lactis.* Still more preferably, the lactic acid bacteria may be one or more kinds of bacteria selected from the group consisting of *Lactococcus lactis* subsp. *lactis* JCM5805, *Lactococcus lactis* subsp. *lactis* JCM20101, *Lactococcus lactis* subsp. *lactis* NBRC12007, *Lactococcus lactis* subsp. *lactis* NRIC1150, *Lactococcus lactis* subsp. *lactis* JCM7638, and *Lactococcus lactis* subsp. *lactis* ATCC11454). Particularly preferably, the lactic acid bacteria may be *Lactococcus lactis* subsp. *lactis* JCM5805.

Further, other preferred embodiments of the genus and the species of the lactic acid bacteria of which the dead cells are used in the present invention include one or more kinds of bacteria selected from the group consisting of bacteria belonging to the genus *Lactococcus.* Preferably, the lactic acid bacteria may be one or more kinds of bacteria selected from the group consisting of *Lactococcus lactis* subsp. *lactis* JCM5805, *Lactococcus lactis* subsp. *lactis* NBRC12007, *Lactococcus lactis* subsp. *lactis* NRIC1150, *Lactococcus lactis* subsp. *lactis* JCM20101, *Lactococcus lactis* subsp. *lactis* JCM7638, *Lactococcus lactis* subsp. *lactis* ATCC11454, *Lactococcus garvieae* NBRC100934, *Lactococcus lactis* subsp. *cremoris* JCM16167, *Lactococcus lactis* subsp. *cremoris* NBRC100676, *Lactococcus lactis* subsp. *hordniae* JCM1180, and *Lactococcus lactis* subsp. *hordniae* JCM11040.

Further, as one embodiment of the lactic acid bacteria in the present invention, preferred examples of the lactic acid bacteria include lactic acid bacteria other than *Lactobacillus paracasei* MCC1849, bacteria belonging to the genus *Lactobacillus* other than *Lactobacillus paracasei* MCC1849, lactic acid bacteria other than *Lactobacillus paracasei,* bacteria belonging to the genus *Lactobacillus* other than *Lactobacillus paracasei,* and lactic acid bacteria other than those of the genus *Lactobacillus.* Examples of the bacteria belonging to the genus *Lactobacillus* other than *Lactobacillus paracasei* include *Lactobacillus acidophilus, Lactobacillus delbrueckii* subsp. *bulgaricus, Lactobacillus delbrueckii* subsp. *delbrueckii, Lactobacillus delbrueckii* subsp. *lactis, Lactobacillus casei, Lactobacillus gasseri, Lactobacillus helveticus, Lactobacillus johnsonii, Lactobacillus parakefiri, Lactobacillus plantarum, Lactobacillus brevis, Lactobacillus rhamnosus, Lactobacillus pentosus, Lactobacillus fermentum, Lactobacillus fructivorans,* and *Lactobacillus hilgardii.*

Regarding the lactic acid bacterial strains listed in the present specification, in the present invention, the above bacterial strains also include bacterial strains equivalent thereto as long as they can suppress a culture medium odor of lactic acid bacteria in a predetermined beverage containing dead cells of the lactic acid bacteria and hesperidin at predetermined concentrations. Here, "equivalent bacterial strain" means a bacterial strain derived from the bacterial strain described above, a bacterial strain from which the bacterial strain described above is derived, or a descendant bacterial strain thereof. The equivalent bacterial strains may also be deposited in other culture collection institutions of bacterial strains. Figure 1 illustrates bacterial strains derived from *Lactococcus lactis* subsp. *lactis* JCM5805 and bacterial strains from which *Lactococcus lactis* subsp. *lactis* JCM5805 is derived. The bacterial strains equivalent to *Lactococcus lactis* subsp. *lactis* JCM5805 illustrated in Figure 1 can also be used as the lactic acid bacteria of the present invention, as long as they can suppress the culture medium odor of the lactic acid bacteria in the beverage containing dead cells of the lactic acid bacteria and hesperidin at predetermined concentrations. In the present specification, the term *"Lactococcus lactis* subsp. *lactis* JCM5805" (*Lactcoccus lactis* JCM5805) also includes such equivalent bacterial strains. Similarly, as used herein, the term "*Lactobacillus rhamnosus* CRL1505" includes such equivalent bacterial strains.

Among the lactic acid bacterial strains described above, the JCM bacterial strains can be obtained from RIKEN BioResource Center, Microbial Materials Development Laboratory (3-1-1 Koyadai, Tsukuba City, Ibaraki), the NBRC bacterial strains can be obtained from the National Institute of Technology and Evaluation (NITE), Biological Resource Center (2-5-8 Kazusakamatari, Kisarazu City, Chiba), the NRIC bacterial strains can be obtained from Tokyo University of Agriculture, Culture Collection Center (1-1-1 Sakuragaoka, Setagaya Ward, Tokyo), and the ATCC bacterial strains can be obtained from the American Type Culture Collection (US).

As mentioned above, *Lactococcus lactis* subsp. *lactis* JCM5805 can be obtained from RIKEN BioResource Center, Microbial Materials Development Laboratory. However, in the present invention, the same bacterial strain of JCM5805 stored at a culture collection institution other than the RIKEN BioResource Center, Microbial Materials Development Laboratory can be used. In detail, the same strain of JCM5805 can be obtained from the National Institute of Technology and Evaluation (NITE), Biological Resource Center (2-5-8 Kazusa-Kamatari, Kisarazu City, Chiba), Tokyo University of Agriculture, Culture Collection Center (1-1-1 Sakuragaoka, Setagaya Ward, Tokyo), the American Type Culture Collection (US), and the like.

In the present specification, the term "lactic acid bacteria" refers to dead cells of lactic acid bacteria. The dead cells of the lactic acid bacteria used in the present invention may either be dry or non-dry, but are preferably dry, for example, suitably in the form of a dry powder, from the viewpoint of the storage stability of the dead cells of the lactic acid bacteria.

The method for preparing the dead cells of the lactic acid bacteria is not particularly limited. Examples of such a method include a method in which the lactic acid bacteria are cultured in a culture medium, the culture medium is sterilized, and then the bacterial cells are collected by filtration, centrifugal separation, or the like, and a method in which the lactic acid bacteria are cultured in a culture medium, the bacterial cells are collected from the culture medium by filtration, centrifugal separation, or the like, and then are sterilized. If necessary, drying process or crushing process may also be further carried out.

It should be noted that the means for sterilization is not particularly limited, and examples thereof include conventional means for killing bacteria, such as UV and gamma irradiation, in addition to heat. Also, live lactic acid bacterial cells may be blended and then a sterilization process is carried out during the preparation of the beverage, where the lactic acid bacteria in the beverage are killed to obtain dead cells of lactic acid bacteria.

In the present invention, the content concentration of the dead cells of one or more kinds of lactic acid bacteria in the beverage is not particularly limited as long as it is 1.3 billion cells/L or more. From the viewpoint of an increase in the culture medium odor of the lactic acid bacteria, which is the problem to be solved by the present invention, and therefore enhancement of the significance of the present invention, the content concentration of the dead cells of one or more kinds of lactic acid bacteria in the beverage may be, for example, 5 billion cells/L or more, 10 billion cells/L or more, 30 billion cells/L or more, preferably 50 billion cells/L or more, 80 billion cells/L or more, 100 billion cells/L or more, more preferably 200 billion cells/L or more, 300 billion cells/L or more, or 600 billion cells/L or more. Further, the upper limit of the content concentration of the dead cells of the one or more kinds of lactic acid bacteria in the beverage is not particularly limited. From the viewpoint of making the degree of the culture medium odor of the lactic acid bacteria within a constant range, the upper limit of the content concentration of the dead cells of the one or more kinds of lactic acid bacteria may be, for example, 6 trillion cells/L or less, 3 trillion cells/L or less, 2 trillion cells/L or less, 1 trillion cells/L or less, 800 billion cells/L or less, 600 billion cells/L or less, 300 billion cells/L or less, 200 billion cells/L or less, 100 billion cells/L or less, 80 billion cells/L or less, 50 billion cells/L or less, 30 billion cells/L or less, or 10 billion cells/L or less. These lower limits and upper limits may be arbitrarily combined.

The content concentration of the dead cells of the lactic acid bacteria in the beverage can be adjusted, for example, by adjusting the amount of the dead cells of the lactic acid bacteria to be blended into the beverage.

It should be noted that examples of a method for measuring the number of dead cells of the lactic acid bacteria in the beverage include known methods for counting lactic acid bacteria without particular limitation, such as the direct microscopic counting method, the electrical sensing zone method, the PCR method, and the flow cytometry method. Among them, the flow cytometry method is preferred.

### (Hesperidin)

Hesperidin is one kind of polyphenol contained in the peel, the piths, the membranes, the pulp, and the like of fruits such as citrus fruits. The hesperidin used in the present invention is not particularly limited, and hesperidin extracted and/or purified from citrus fruits or the like, food-additive hesperidin, and fruit juice or processed fruit juice products containing hesperidin from citrus fruits or the like may be used alone or in combination, as appropriate. The type of the citrus fruit described above is not particularly limited, and examples thereof include lemon, lime, orange, mandarin orange, grapefruit, yuzu, iyokan, summer orange, hassaku, ponkan, shekwasha, and kabosu, and orange and mandarin orange are suitably used. In the present invention, as the hesperidin, one or more selected from hesperidin and hesperidin derivatives may be used. The hesperidin derivatives are not particularly limited, and from the viewpoint of a higher water solubility and therefore capability of being contained in a higher amount in the beverage, examples of the hesperidin derivative include methylhesperidin, and hesperidin glycosides (transglycosylated hesperidin). Examples of the hesperidin glycosides include glucosyl hesperidin (more preferably, monoglucosyl hesperidin).

The content concentration of the hesperidin in the present invention (the content concentration in the beverage or the concentration added to the beverage) is not particularly limited as long as it is from 10 to 1,000 mg/L with respect to the total amount of the beverage. From the viewpoint of more effectively suppressing the culture medium odor of the lactic acid bacteria, which is the problem to be solved by the present invention, the lower limit is 10 mg/L or more, 12 mg/L or more, preferably 15 mg/L or more, 20 mg/L or more, 30 mg/L or more, 40 mg/L or more, more preferably 50 mg/L or more, 60 mg/L or more, 70 mg/L or more, 80 mg/L or more, 90 mg/L or more, and even more preferably 100 mg/L or more. Further, from the viewpoint of preventing the off-flavor of the hesperidin itself from becoming problematic, the upper limit is less than 1,500 mg/L, preferably 1,000 mg/L or less. Moreover, other embodiments of the upper limit of the hesperidin include 900 mg/L or less, 800 mg/L or less, 700 mg/L or less, 600 mg/L or less, 500 mg/L or less, 400 mg/L or less, 300 mg/L or less, 200 mg/L or less, and 100 mg/L or less. These lower limits and upper limits may be arbitrarily combined. Therefore, considering the balance therebetween, the content concentration of the hesperidin may be from 10 to 1,000 mg/L, from 15 to 1,000 mg/L, preferably from 50 to 1,000 mg/L, from 50 to 800 mg/L, from 50 to 500 mg/L, or the like. It should be noted that the content concentration of the hesperidin in the present invention represents the concentration of the total amount of all hesperidin amount contained in the beverage and the amount of hesperidin obtained by converting from the amount of the hesperidin derivatives, with respect to the entire beverage.

As one embodiment of the beverage according to the present invention, a beverage is preferably exemplified in which fruit juice or a processed fruit juice product containing hesperidin from citrus fruits or the like is added with the result that the beverage contains the hesperidin at the predetermined concentration defined in the present invention. Further, as another embodiment of the beverage according to the present invention, a beverage is also preferably exemplified in which, after adding fruit juice or a processed fruit juice product containing hesperidin from citrus fruits or the like, hesperidin is further additionally added, with the result that the beverage contains the hesperidin at the predetermined concentration defined in the present invention.

It should be noted that the content concentration of the hesperidin can be calculated and/or measured by a method known to those skilled in the art. Examples of such a method include an analytical method using HPLC (high-performance liquid chromatography). A more specific example of the method for measuring the hesperidin concentration is described below.

To 4 g of a sample to be measured, 3 mL of water and 30 mL of methanol are added, and the resulting solution is subjected to extraction by ultrasonic irradiation for five minutes. Thereafter, the volume is made up to 50 mL. This solution may be diluted as appropriate to prepare a sample solution. The high-performance liquid chromatography can be carried out under the following conditions.

### [High-Performance Liquid Chromatography Operating Conditions]

- Detector: Ultraviolet-visible spectrophotometer
- Column: XBridge C18, φ 4.6 mm × 150 mm, with a particle size of 3.5 µm
- Column temperature: 40°C
- Mobile phase: mixed solution of water, acetonitrile, and phosphoric acid (850:150:1)
- Flow rate: 1.0 mL/min
- Detection wavelength: 280 nm

### (pH Value)

The pH value of the beverage according to the present invention is not particularly limited, and examples thereof include 2.5 or more, 2.8 or more, 3.0 or more, 3.2 or more, 3.5 or more, 3.8 or more, and 4.0 or more, and 8.0 or less, 7.0 or less, 6.0 or less, 5.0 or less, 4.6 or less, 4.3 or less, 4.0 or less, 3.8 or less, 3.5 or less, 3.2 or less, and 3.0 or less. More specifically, the pH value of the beverage may be from 2.5 to 8.0, from 2.5 to 7.0, or from 2.5 to 4.6. The pH value is a value measured at 20°C.

The pH value of the beverage according to the present invention can be adjusted by a conventional method, such as addition of an acidulant, or a pH adjusting agent. Examples of such a pH adjusting agent include substances that exhibit alkalinity or acidity when dissolved in water, and specific examples thereof include baking soda (sodium bicarbonate), sodium carbonate, potassium carbonate, sodium hydroxide, potassium hydroxide, trisodium phosphate, tripotassium phosphate, sodium citrate, and carbon dioxide gas.

The pH value of the beverage according to the present invention can be measured by a conventional method using a pH meter or the like.

### (Beverage of the Present Invention)

The beverage of the present invention is not particularly limited as long as it is a beverage that contains dead cells of one or more kinds of lactic acid bacteria at a concentration of 1.3 billion cells/L or more, and contains hesperidin at a concentration of from 10 to 1,000 mg/L.

The beverage of the present invention does not particularly differ from an ordinary "beverage" in terms of the raw ingredients used for production, the method for production, and the conditions of the production, except that the content concentration of the dead cells of the one or more kinds of lactic acid bacteria is 1.3 billion cells/L or more, and the content concentration of the hesperidin is from 10 to 1,000 mg/L.

The beverage of the present invention contains, as essential components, the dead cells of the one or more kinds of lactic acid bacteria in an amount of 1.3 billion cells/L or more, and the hesperidin in an amount of from 10 to 1,000 mg/L. The beverage of the present invention may contain an optional ingredient within a range that does not impair the effects of the present invention. As such an optional ingredient, one or more selected from the group consisting of acidulants, sweetening agents, bittering agents, flavoring agents, colorants, fruit juice or processed fruit juice products, vegetable juice or processed vegetable juice products, antioxidant agents, preservative agents, stabilizers (such as a thickening stabilizer), milk components, soybean components, lactic acid fermentation products, emulsifying agents, pH adjusting agents, dietary fibers, vitamins, and minerals may be contained, or may not be contained.

Examples of the acidulants include phosphoric acid, lactic acid, tartaric acid, citric acid, malic acid, and adipic acid. Examples of the sweetening agents include sugars such as sucrose, fructose, glucose, maltose, starch hydrolysates, reduced starch syrup, dextrin, cyclodextrin, trehalose, brown sugar, and honey; sugar alcohols such as sorbitol, erythritol, xylitol, and mannitol; and high-intensity sweetening agents such as sucralose, stevia, acesulfame potassium, saccharin sodium, aspartame, glycyrrhizin, dipotassium glycyrrhizinate, thaumatin, and neotame.

As used in the present specification, the term "fruit juice" means juice squeezed from fruit. Fruit juice can be produced by methods generally used for producing fruit juice as a raw material for a fruit beverage, such as a method in which whole fruit (the entire fruit including peel and the like) is compressed and separated into juice and residue including the peel using an inline juicer or the like, and the compressed and separated juice is then sterilized and cooled, or a method in which whole fruit is separated into the peel and the pulp or cut in half and then only the pulp is squeezed, followed by the sterilization and the cooling. The fruit juice includes concentrated fruit juice obtained by concentrating juice squeezed from fruit, and reconstituted fruit juice obtained by diluting the concentrated fruit juice. The juice squeezed from fruit refers to a puree or the like obtained by crushing the fruit, squeezing or straining it, and removing the peel, seeds, and the like.

The fruit juice may be cloudy juice, or may be clear juice obtained by clarification treatment. Examples of the method for clarifying the fruit juice include an enzymatic treatment method, a microfiltration method, and an ultrafiltration method.

As the fruit juice, commercially available juice, concentrated juice, paste, or the like may be used. In detail, juices and concentrated juices specified in the JAS standards (Japanese Agricultural Standards for fruit beverages) may be used, and for example, one or more of such juices may be used for preparing the beverage according to the present invention.

As used in the present specification, the term "processed fruit juice product" means a processed product of fruit juice. Examples of the processed fruit juice product include fruit juice extracts and fruit juice flavors.

The beverage according to the present invention can be produced by incorporating dead cells of one or more kinds of lactic acid bacteria into the beverage at a concentration of 1.3 billion cells/L or more, and incorporating hesperidin into the beverage at a concentration of from 10 to 1,000 mg/L, at any stage in a general method for production of a "beverage" well known in the art.

The beverage of the present invention may not be a packaged beverage, but is preferably a packaged beverage. Examples of a container of the beverage include resin bottle containers such as PET bottles, polypropylene bottles, and polyvinyl chloride bottles; glass bottles; and cans.

The beverage of the present invention may or may not be subjected to a heat sterilization treatment. However, the culture medium odor of the lactic acid bacteria in the beverage becomes stronger when the beverage containing the dead cells of the lactic acid bacteria (for example, dried powder of the lactic acid bacteria) at a predetermined concentration is heated at a predetermined high temperature (for example, 65°C or higher, 70°C or higher, 75°C or higher, 80°C or higher, 85°C or higher, 100°C or higher, 120°C or higher, or the like) for a predetermined time (for example, four minutes or more, ten minutes or more, 20 minutes or more, 30 minutes or more, or the like), as compared to the beverage for which such heating has not been carried out. Therefore, since the heat sterilization treatment of the beverage increases the culture medium odor of the lactic acid bacteria, which is the problem to be solved by the present invention, and thus enhances the significance of the present invention, the beverage of the present invention is more suitably a heat-sterilized beverage. Further, also from the viewpoint of improving the preservability, the beverage of the present invention is more suitably a heat-sterilized beverage. As the method and conditions for the heat sterilization treatment, ordinary methods and conditions used for beverages such as packaged beverages can be used. When the beverage of the present invention is subjected to the heat sterilization treatment, the conditions for the heat sterilization treatment in terms of the heating temperature and time may be at 65°C for ten minutes or more, at 80°C for 10 minutes or more, at 85°C for ten minutes or more, at 85°C for 30 minutes or more, at 120°C for four minutes or more, or conditions having an effect equivalent to or greater than these conditions.

The beverage of the present invention may be a beverage sold in any of a refrigerated state (at a temperature of from 0 to 10°C), room temperature, or a heated state (at a temperature of from 50 to 70°C), but is preferably a beverage sold in the refrigerated state other than a chilled beverage.

The type of the beverage of the present invention is not particularly limited, but is preferably a fruit juice-containing beverage which contains fruit juice or a processed fruit juice product, more preferably a fruit juice-containing beverage which contains citrus fruit juice or a processed citrus fruit juice product, and preferably a fruit juice-containing beverage which contains mandarin orange or orange juice or a processed mandarin orange or orange fruit juice product. Further, the beverage of the present invention may also be preferably a beverage other than fermented milk or a lactic acid bacteria beverage.

### (Method for Production According to the Present Invention)

The beverage of the present invention can be produced in accordance with a conventionally known method for producing a beverage, except that one or more kinds of dead cells of lactic acid bacteria are incorporated into the beverage at a concentration of 1.3 billion cells/L or more and hesperidin is incorporated into the beverage at a concentration of from 10 to 1,000 mg/L during the production of the beverage.

The method for the production according to the present invention is not particularly limited as long as it is a method for producing the beverage, characterized in that the dead cells of the one or more kinds of lactic acid bacteria are incorporated into the beverage at a concentration of 1.3 billion cells/L or more and hesperidin is incorporated into the beverage at a concentration of from 10 to 1,000 mg/L during the production of the beverage.

More specifically, as a method for incorporating the dead cells of the one or more kinds of lactic acid bacteria into the beverage at a concentration of 1.3 billion cells/L or more and incorporating the hesperidin into the beverage at a concentration of from 10 to 1,000 mg/L, a method is exemplified in which, during the production of the beverage, the dead cells of the one or more kinds of lactic acid bacteria and hesperidin are incorporated into the raw materials for the production of the beverage (for example, "water" or "water containing a part or all of optional ingredients) (hereinafter, also collectively referred to as "water and the like") so that the concentration of the dead cells of the one or more kinds of lactic acid bacteria becomes 1.3 billion cells/L or more (it is preferably prepared to have a concentration of 1.3 billion cells/L or more) and the concentration of the hesperidin becomes from 10 to 1,000 mg/L (it is preferably prepared to have a concentration of from 10 to 1,000 mg/L). Alternatively, a method may also be exemplified in which the dead cells of the one or more kinds of lactic acid bacteria and the hesperidin are simultaneously incorporated into water or the like together with a part or all of the optional ingredients at respective predetermined concentrations.

In the method for production according to the present invention, the dead cells of the one or more kinds of lactic acid bacteria are incorporated into the beverage at a concentration of 1.3 billion cells/L and the hesperidin at a concentration of from 10 to 1,000 mg/L are incorporated into the beverage as essential ingredients. In the method for production according to the present invention, as optional ingredients, one or more selected from the group consisting of acidulants, sweetening agents, bittering agents, flavoring agents, colorants, fruit juice or processed fruit juice products, vegetable juice or processed vegetable juice products, antioxidant agents, preservative agents, stabilizers (such as a thickening stabilizer), milk components, soybean components, lactic acid fermentation products, emulsifying agents, pH adjusting agents, dietary fibers, vitamins, and minerals may or may not be incorporated into the beverage.

In the method for production according to the present invention, the order of the incorporation of the raw materials for the production is not particularly limited as long as the beverage of the present invention containing them can be produced. When the beverage of the present invention is a packaged beverage, it can be produced by preparing a liquid in which the raw materials for the production are mixed, filling the liquid into a container, and sealing the container.

In the method for production according to the present invention, the heat sterilization treatment of the beverage may be carried out or may not be carried out. However, as described above, since the heat sterilization treatment of the beverage increases the culture medium odor of lactic acid bacteria, which is the problem to be solved by the present invention, and thus enhances the significance of the present invention, the method for production according to the present invention may more suitably include carrying out the heat sterilization treatment of the beverage. Further, also from the viewpoint of improving the preservability, the method for production according to the present invention may more suitably include carrying out the heat sterilization treatment of the beverage. The method for the heat sterilization treatment is not particularly limited, and examples thereof include a high-temperature short-time sterilization method (HTST method), a pasteurization method, an ultra-high-temperature treatment method (UHT method), and a retort sterilization method.

### (Method for Suppression According to the Present Invention)

The method for suppression according to the present invention is not particularly limited as long as it is a method for suppressing the culture medium odor of lactic acid bacteria in a beverage, characterized in that the dead cells of the one or more kinds of lactic acid bacteria are incorporated into the beverage at a concentration of 1.3 billion cells/L or more and hesperidin is incorporated into the beverage at a concentration of from 10 to 1,000 mg/L during the production of the beverage.

In the production of the beverage, as the method for incorporating the dead cells of the one or more kinds of lactic acid bacteria into the beverage at a concentration of 1.3 billion cells/L or more and incorporating the hesperidin into the beverage at a concentration of from 10 to 1,000 mg/L, the method similar to the method described above (the method for production according to the present invention) can be used.

### (Suppression of Culture Medium Odor of Lactic Acid Bacteria According to the Present Invention)

The beverage of the present invention is a beverage in which the culture medium odor of the lactic acid bacteria is suppressed. As used in the present specification, the term "culture medium odor" means an off-odor derived from the culture medium for culturing the lactic acid bacteria, which tends to be problematic when the dead cells of the lactic acid bacteria (for example, dried powder) cultured in a culture medium containing a yeast extract, a meat extract, peptone, and the like are blended. The culture medium odor of the lactic acid bacteria is an unfavorable distinctive flavor, accompanied by miscellaneous tastes such as umami and animal-like odor, particularly for general soft drinks or the like. As described above, since the heat sterilization treatment of the beverage increases the culture medium odor of the lactic acid bacteria, which is the problem to be solved by the present invention, and thus enhances the significance of the present invention, the method for the suppression according to the present invention may more suitably be applied to a beverage of which the production includes carrying out the heat sterilization treatment.

In the present invention, beverage "in which the culture medium odor of lactic acid bacteria is suppressed" means a beverage containing dead cells of one or more kinds of lactic acid bacteria at a concentration of 1.3 billion cells/L, in which, as compared to a beverage (hereinafter, also referred to as a "control beverage") produced using the same raw materials at the same final concentrations and by the same method for production except that hesperidin is not contained at a concentration of from 10 to 1,000 mg/L, the culture medium odor of the lactic acid bacteria is suppressed.

The degree of the culture medium odor of lactic acid bacteria in a beverage, and how such a degree is as compared to that of the control beverage in the present invention (for example, whether the culture medium odor of the lactic acid bacteria is suppressed and to what extent it is suppressed), can be easily and clearly determined by a trained panel.

The present invention will be specifically described based on the following Examples, but the present invention is not to be limited to these Examples.

### Examples

### [Test 1] Influence by Incorporation of Hesperidin

In order to examine how incorporation of hesperidin into a beverage influences on a culture medium odor of lactic acid bacteria, the following test was conducted.

### (1. Preparation of Sample Beverages)

Sample beverages of Test Examples 1 to 12 were prepared by incorporating a dried powder of dead cells of *Lactococcus lactis* subsp. *lactis* JCM5805, hesperidin, and phosphoric acid into ion-exchanged water so as to have the concentration of *Lactococcus lactis* subsp. *lactis* JCM5805, the concentration of hesperidin, and the pH value as shown in Table 2. Each sample beverage was filled into a can container and subjected to a heat sterilization treatment at 80°C for ten minutes.

### (2. Sensory Evaluation Test)

The degree of the culture medium odor of the sample beverages of the Test Examples 1 to 12 obtained above were evaluated with sensory evaluation test by four trained expert panelists according to the evaluation criteria in Table 1. It should be noted that the difference between scores of 1 and 1.5, 1.5 and 2, 2 and 2.5, 2.5 and 3, 3 and 3.5, 3.5 and 4, 4 and 4.5, and 4.5 and 5 were each regarded as being of the same degree. For each sample beverage, the average value of the evaluation results of the four expert panelists was calculated, and the numerical value obtained by rounding off the second decimal place of the average value was adopted as the evaluation result of the sample beverage. The standard deviation was 0.5 or less for all samples. A beverage of which the evaluation score decreased by 0.5 points or more as compared to Test Example 1 (the control beverage) can be evaluated as a beverage in which the culture medium odor is suppressed.

**[Table 1]**

| Evaluation Score | Criteria for Evaluation of Culture Medium Odor |
|---|---|
| 5 | Strong culture medium odor |
| 4.5 | Culture medium odor to a degree between the evaluation scores 5 and 4 |
| 4 | Slightly strong culture medium odor |
| 3.5 | Culture medium odor to a degree between the evaluation scores 4 and 3 |
| 3 | Slightly weak culture medium odor |
| 2.5 | Culture medium odor to a degree between the evaluation scores 3 and 2 |
| 2 | Weak culture medium odor |
| 1.5 | Culture medium odor to a degree between the evaluation scores 2 and 1 |
| 1 | No culture medium odor |

The results of the sensory evaluation test for the sample beverages of Test Examples 1 to 12 are shown in Table 2.

**[Table 2]**

| Test Example No. | JCM5805 (x 10⁸ cells /L) | Hesperidin (mg/L) | pH | Evaluation of Culture Medium Odor |
|---|---|---|---|---|
| 1 | | 0 | | 5.0 |
| 2 | | 5 | | 5.0 |
| 3 | | 10 | | 4.3 |
| 4 | | 12 | | 4.0 |
| 5 | | 15 | | 3.5 |
| 6 | 2000 | 20 | 4.0 | 3.1 |
| 7 | | 50 | | 2.4 |
| 8 | | 100 | | 2.1 |
| 9 | | 200 | | 1.5 |
| 10 | | 500 | | 1.3 |
| 11 | | 1000 | | 1.1 |
| 12 | | 1500 | | 1.1 |

As can be seen from the results in the Table 2, it was shown that the culture medium odor was suppressed in all of the Test Examples 3 to 12 as compared to that of the Test Example 1 (the control beverage). From these results, it was shown that, when hesperidin is incorporated into a beverage containing dead cells of lactic acid bacteria at a concentration of 10 mg/L or more, a suppressive effect on the culture medium odor of the lactic acid bacteria was obtained. Further, it was also shown that such an effect increases depending on the concentration of the hesperidin to be incorporated. It was also shown that, from the viewpoint of achieving a greater suppressive effect on the culture medium odor of the lactic acid bacteria, the concentration of the hesperidin is preferably 15 mg/L or more, and more preferably 50 mg/L or more. However, for the Test Example 12, although the suppressive effect on the culture medium odor of the lactic acid bacteria was high, it was also evaluated to have a strong off-odor of hesperidin itself. Therefore, the concentration of the hesperidin is preferably less than 1,500 mg/L, and more preferably 1,000 mg/L or less.

### [Test 2] Influence by Difference in Concentration of Dead Cells of Lactic Acid Bacteria

In order to examine how a difference in the concentration of dead cells of lactic acid bacteria influences on the suppressive effect of hesperidin on the culture medium odor of lactic acid bacteria, the following test was conducted.

### (1. Preparation of Sample Beverages)

Sample beverages of Test Examples 13 to 24 were prepared and subjected to a heat sterilization treatment in the same manner as in the [Test 1] described above, except that the concentrations of *Lactococcus lactis* subsp. *lactis* JCM5805 strain and hesperidin were set to the numerical values shown in Table 3. It should be noted that the sample beverages of the Test Examples 1 and 6 were prepared and subjected to the heat sterilization treatment in the same manner as in the [Test 1] described above.

### (2. Sensory Evaluation Test)

The sample beverages of the Test Examples 1, 6, and 13 to 24 obtained above were subjected to a sensory evaluation test in the same manner as in the [Test 1] described above. The results are shown in Table 3.

**[Table 3]**

| Test Example No. | JCM5805 (x 10⁸ cells /L | Hesperidin (mg/L) | pH | Evaluation of Culture Medium Odor |
|---|---|---|---|---|
| 13 | 5 | 0 | | 1.0 |
| 14 | 13 | | | 2.0 |
| 15 | 100 | | | 2.6 |
| 16 | 500 | | | 3.6 |
| 17 | 1000 | | | 4.5 |
| 1 | 2000 | | | 5.0 |
| 18 | 6000 | | 4.0 | 5.0 |
| 19 | 5 | 20 | | 1.0 |
| 20 | 13 | | | 1.1 |
| 21 | 100 | | | 1.4 |
| 22 | 500 | | | 2.0 |
| 23 | 1000 | | | 2.5 |
| 6 | 2000 | | | 3.1 |
| 24 | 6000 | | | 3.5 |

As can be seen from the results in the Table 3, it was shown that the culture medium odor was perceived when the concentration of the dead cells of the lactic acid bacteria was 1.3 billion cells/L or more, and the culture medium odor became stronger as the concentration increased. Further, it was also shown that, regardless of the concentration of the dead cells of the lactic acid bacteria, the incorporation of the hesperidin into the beverage resulted in the suppressive effect on the culture medium odor.

### [Test 3] Influence by Difference in pH Value

In order to examine how a difference in the pH value of the beverage influences on the suppressive effect of hesperidin on the culture medium odor of lactic acid bacteria, the following test was conducted.

### (1. Preparation of Sample Beverages)

Sample beverages of Test Examples 25 to 34 were prepared and subjected to a heat sterilization treatment in the same manner as in the [Test 1] described above, except that the pH value was set to each of the numerical values shown in Table 4. It should be noted that the sample beverages of the Test Examples 1 and 6 were prepared and subjected to the heat sterilization treatment in the same manner as in the [Test 1] described above.

### (2. Sensory Evaluation Test)

The sample beverages of the Test Examples 1, 6, and 25 to 34 obtained above were subjected to a sensory evaluation test in the same manner as in the [Test 1] described above. The results are shown in Table 4.

**[Table 4]**

| Test Example No. | JCM5805 (x 10⁸ cells /L) | Hesperidin (mg/L) | pH | Evaluation of Culture Medium Odor |
|---|---|---|---|---|
| 25 | | 0 | 2 | 5.0 |
| 26 | | | 2.5 | 5.0 |
| 1 | | | 4 | 5.0 |
| 27 | | | 5 | 5.0 |
| 28 | | | 7 | 5.0 |
| 29 | 2000 | | 8 | 5.0 |
| 30 | | 20 | 2 | 5.0 |
| 31 | | | 2.5 | 3.0 |
| 6 | | | 4 | 3.1 |
| 32 | | | 5 | 3.0 |
| 33 | | | 7 | 3.0 |
| 34 | | | 8 | 3.5 |

As can be seen from the results in the Table 4, it was shown that the suppressive effect on the culture medium odor was achieved when the hesperidin is incorporated into the sample beverage having a pH value of from 2.5 to 8.

### [Test 4] Formulation Example When Using Citrus Fruit Juice

The following test was conducted using citrus fruit juice containing hesperidin, and the like.

### (1. Preparation of Sample Beverages)

Sample beverages of Test Examples 35 to 42 were prepared and subjected to a heat sterilization treatment in the same manner as in the [Test 1] described above, except that 2% of orange juice containing hesperidin at a concentration of 355 mg/L was added so that the beverages contain 7.1 mg/L of hesperidin derived from orange juice, and hesperidin was further added, as necessary, so that the final concentrations of hesperidin became the respective values shown in Table 5. It should be noted that the sample beverage of the Test Example 1 was prepared and subjected to the heat sterilization treatment in the same manner as in the [Test 1] described above.

It should be noted that the concentration of the hesperidin contained in the orange juice was measured by the following method.

To 4 g of the sample to be measured, 3 mL of water and 30 mL of methanol were added, and the resulting solution was subjected to extraction by ultrasonic irradiation for five minutes. Thereafter, the volume was made up to 50 mL. This solution was diluted as appropriate to prepare the sample solution. High-performance liquid chromatography was carried out under the following conditions:
[High-Performance Liquid Chromatography Operating Conditions]
- Detector: Ultraviolet-visible spectrophotometer
- Column: XBridge C18, φ 4.6 mm × 150 mm, with a particle size of 3.5 µm
- Column temperature: 40°C
- Mobile phase: mixed solution of water, acetonitrile, and phosphoric acid (850:150:1)
- Flow rate: 1.0 mL/min
- Detection wavelength: 280 nm

### (2. Sensory Evaluation Test)

The sample beverages of the Test Example 1 and the Test Examples 35 to 42 obtained above were subjected to a sensory evaluation test in the same manner as in the [Test 1] described above. The results are shown in Table 5.

**[Table 5]**

| Test Exampl e No. | JCM5805 (x 10⁸ cells /L) | Hesperidin (mg/L) | pH | Evaluation of Culture Medium Odor |
|---|---|---|---|---|
| 1 | | 0 | | 5.0 |
| 35 | | 7.1 | | 4.8 |
| 36 | | 10 | | 4.0 |
| 37 | | 15 | | 3.3 |
| 38 | 2000 | 20 | 4 | 2.8 |
| 39 | | 100 | | 2.1 |
| 40 | | 200 | | 1.6 |
| 41 | | 500 | | 1.3 |
| 42 | | 1000 | | 1.0 |

As can be seen from the results in the Table 5, it was shown that, also when orange juice was partially used so that the concentration of the hesperidin in the beverage became the predetermined concentration, the suppressive effect on the culture medium odor of the lactic acid bacteria was achieved, as in the case where no orange juice was used (Table 2).

### Industrial Applicability

According to the present invention, it is possible to provide a beverage containing dead cells of lactic acid bacteria in which a culture medium odor of the lactic acid bacteria is suppressed, a method for producing the same, and the like.

## Claims

1. A beverage comprising dead cells of one or more kinds of lactic acid bacteria at a concentration of 1.3 billion cells/L or more, and hesperidin at a concentration of from 10 to 1,000 mg/L.

2. The beverage according to claim 1, wherein a pH value of the beverage is 2.5 or more and 8.0 or less.

3. The beverage according to claim 1 or 2, wherein the lactic acid bacteria are one or more kinds of bacteria selected from the group consisting of bacteria belonging to the genus *Lactococcus.*

4. A method for producing a beverage, comprising incorporating dead cells of one or more kinds of lactic acid bacteria into the beverage at a concentration of 1.3 billion cells/L or more, and incorporating hesperidin into the beverage at a concentration of from 10 to 1,000 mg/L during the production of the beverage.

5. A method for suppressing a culture medium odor of lactic acid bacteria in a beverage, comprising incorporating dead cells of one or more kinds of lactic acid bacteria into the beverage at a concentration of 1.3 billion cells/L or more, and incorporating hesperidin into the beverage at a concentration of from 10 to 1,000 mg/L during the production of the beverage.
